# DEMANDE DE BREVET EUROPEEN

(11) **EP 1 466 782 A2**
(43) Date de publication de la demande: **13.10.2004**
(21) Numéro de dépôt: 04290966.3
(22) Date de dépôt: 09.04.2004
(51) Int. Cl.: B60Q 1/08, F21V 14/08

(54) **Ensemble projecteur multifonction pour véhicule automobile**

(30) Priorité: 11.04.2003 FR 0304586
(71) Demandeur: VALEO VISION, 93012 Bobigny Cédex (FR)
(72) Inventeur: Chave, Rémy, 75007 Paris (FR); Pauty, Etienne, 75019 Paris (FR); Godbillon, Vincent, 75011 Paris (FR)

(57) **Abrégé**

L'invention a pour objet un ensemble projecteur, comprenant un premier dispositif projecteur et d'un deuxième dispositif projecteur, le premier dispositif projecteur et le deuxième dispositif projecteur étant disposés sur une face avant d'un véhicule automobile. Le premier dispositif projecteur et le deuxième dispositif projecteur sont de même type et produisent respectivement un premier faisceau lumineux (201) et un deuxième faisceau lumineux (202), le premier faisceau lumineux (201) et le deuxième faisceau lumineux (202) étant identiques dans une première configuration de l'ensemble projecteur. Le premier dispositif projecteur comporte un premier mécanisme pour modifier le premier faisceau lumineux (201) et obtenir ainsi au moins une deuxième configuration de l'ensemble projecteur. Chaque deuxième configuration produit un faisceau lumineux global (300,400,500,600) résultant d'une superposition du premier faisceau lumineux modifié (301,401,501,601) et du deuxième faisceau lumineux (202), le deuxième faisceau lumineux étant alors différent du premier faisceau lumineux modifié (401).

## Description

La présente invention a pour objet un ensemble projecteur multifonction, constitué d'un premier dispositif projecteur et d'un deuxième dispositif projecteur. Elle a essentiellement pour but de proposer une solution pour obtenir, à partir d'une paire de dispositifs projecteurs relativement simples dans la mesure où ils ne font pas appel à une multitude de caches pour créer différentes lignes de coupure d'un faisceau lumineux produit, différents faisceaux lumineux satisfaisant à différentes normes et/ou réglementations.

Le domaine de l'invention est, d'une façon générale, celui des projecteurs de véhicule automobile. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des feux anti-brouillard.

Par ailleurs, on connaît un type de projecteurs perfectionnés, appelés projecteurs bimodes, qui cumulent les fonctions de feux de croisement et de feux longue portée : à cet effet, on peut par exemple disposer à l'intérieur du projecteur bimode un cache, constitué par exemple d'une plaque métallique, amovible pouvant passer sur commande d'une première position dans laquelle il n'occulte pas le signal lumineux produit par la source lumineuse du projecteur, la portée du projecteur correspondant alors à celle des feux de route, à une deuxième position dans laquelle il occulte une partie du signal lumineux produit par la source lumineuse du projecteur, la portée du projecteur étant ainsi limitée à celle des feux de croisement. Cet exemple de réalisation est principalement mis en oeuvre dans les dispositifs projecteurs de type elliptiques.

Une autre façon de réaliser un projecteur bimode est de donner la possibilité à une source lumineuse et à un réflecteur du projecteur considéré de se déplacer, sur commande, l'un par rapport à l'autre. Dans ce cas, une première position de la source lumineuse par rapport au réflecteur permet de créer un faisceau lumineux de type feu de croisement, et une deuxième position de la source lumineuse par rapport au réflecteur permet de créer un faisceau lumineux de type feu de route. La structure et la disposition des différentes surfaces complexes constituant le réflecteur permettant d'obtenir directement une ligne de coupure souhaitée pour l'utilisation du projecteur en tant que feu de croisement. Cet exemple de réalisation est principalement mis en oeuvre dans les dispositifs projecteurs de type paraboliques, également dits de réflexion à surface complexe.

Les deux familles principales classiques de dispositifs projecteurs, qui correspondent à deux agencements distincts d'éléments constituant le projecteur, et qui sont susceptibles d'intervenir dans l'élément projecteur selon l'invention, sont les suivantes:
La première famille est celle des projecteurs dits elliptiques. Dans ce type de projecteurs, une tache de concentration lumineuse est engendrée par une source lumineuse disposée dans un miroir. Typiquement, la source lumineuse est disposée au premier foyer d'un miroir en forme d'ellipsoïde, ladite tache se formant au second foyer du miroir. La tache de concentration lumineuse est ensuite projetée sur la route par une lentille convergente, par exemple une lentille de type plan-convexe.
La seconde famille est celle des projecteurs dits de réflexion à surface complexe, ou parabolique. Dans ce type de projecteurs, un faisceau lumineux est engendré par une source lumineuse de petite dimension disposée dans un réflecteur, ou miroir. La projection sur la route des rayons lumineux réfléchis par un réflecteur approprié permet d'obtenir directement un faisceau lumineux obéissant aux différentes contraintes imposées par les normes. Cette famille de projecteurs inclut les projecteurs dits à surface libre, ou surface complexe, qui permettent d'obtenir directement un faisceau lumineux présentant une ligne de coupure désirée.

Cependant, les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions.

Ainsi, lorsqu'un véhicule aborde un virage, les projecteurs continuent à éclairer droit devant eux alors qu'il serait plus judicieux d'orienter le faisceau lumineux dans la direction du virage emprunté.

Par ailleurs, lorsqu'un véhicule est sur une autoroute, il serait judicieux de concentrer le flux lumineux du feu de croisement au niveau de l'axe optique du dispositif projecteur, afin de faire porter un peu plus loin le faisceau produit.

Toujours sur autoroute, il peut être intéressant d'orienter une partie du faisceau lumineux vers des points particuliers, appelés points de portique, de façon à augmenter le flux lumineux émis vers les panneaux de signalisation d'autoroute sous lesquels le véhicule passe.

A l'opposé, lorsqu'un véhicule circule en ville, il n'est pas nécessaire de faire porter le faisceau lumineux aussi loin que sur des routes dégagées, mais il peut être judicieux de mieux éclairer les voies de circulation sur les côtés du véhicule, et donc d'étaler les faisceaux lumineux produit à l'avant du véhicule.

Enfin, en cas d'intempérie de type forte averse ou brouillard, le conducteur peut être ébloui par les reflets des faisceaux lumineux produits par ses propres projecteurs. Il est alors judicieux d'étaler en largeur le faisceau lumineux et de diminuer légèrement le flux lumineux envoyé vers le bas.

Ainsi, en complément des fonctions projecteurs principales classiques, notamment codes et routes, différents perfectionnements sont progressivement apparus. On a ainsi vu se développer des fonctions élaborées, ou fonctions avancées, parmi lesquelles on trouve notamment:
- une fonction dite BL (Bending Light en anglais pour lumière virage), qui peut se décomposer en une fonction dite DBL (Dynamic Bending Light en anglais pour lumière virage mobile) et une fonction dite FBL (Fixed Bending Light en anglais pour lumière virage fixe).
   La fonction DBL permet de modifier l'orientation d'un faisceau lumineux produit par une source lumineuse, de telle sorte que lorsque le véhicule aborde un virage, la route soit éclairée de façon optimale.
   La fonction FBL a pour vocation d'éclairer progressivement le bas-côté de la route lorsque le véhicule effectue un virage ; à cet effet, on prévoit une source lumineuse supplémentaire qui vient compléter progressivement les feux de croisement ou de route lors de la négociation d'un virage ;
- une fonction dite Town Light en anglais, pour feu de ville. Cette fonction assure l'élargissement d'un faisceau de type feu de croisement tout en diminuant légèrement sa portée ;
- une fonction dite Motorway Light en anglais, pour feu d'autoroute.
   Cette fonction assure une augmentation de la portée d'un feu de croisement ;
- une fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur.

Les fonctions BL, AWL, Town Light, Motorway Light et Overhead Light sont regroupées sous le nom de fonctions AFS.

Afin de proposer l'ensemble de ces fonctionnalités, on a proposé, dans l'état de la technique différentes solutions.

Une première solution consiste en l'utilisation, dans chaque dispositif projecteur de type code, d'un cylindre en rotation sur lui-même, l'axe de rotation étant horizontal et perpendiculaire à l'axe optique du dispositif projecteur. La surface latérale du cylindre n'est pas parfaitement lisse ; elle présente un ensemble de découpes, chacune des découpes permettant d'obtenir un faisceau lumineux correspondant à une des fonctions AFS lorsque la découpe considérée est amenée, par rotation du cylindre, face à la source lumineuse du dispositif projecteur considéré.

Une deuxième solution consiste en l'utilisation, dans chaque dispositif projecteur de type code, d'une plaque, approximativement en forme de disque, en rotation sur elle-même, l'axe de rotation étant horizontal et parallèle à l'axe optique du dispositif projecteur. La périphérie du disque n'est pas parfaitement lisse ; elle présente un ensemble d'irrégularités, chacune des irrégularités permettant d'obtenir un faisceau lumineux correspondant à une des fonctions AFS lorsque l'irrégularité considérée est amenée, par rotation du disque, face à la source lumineuse du dispositif projecteur considéré.

Une troisième solution consiste en l'utilisation, dans chaque dispositif projecteur de type code, d'un cache en rotation autour d'un axe vertical.

La périphérie de ce cache n'est pas parfaitement lisse ; elle présente un ensemble d'irrégularités, chacune de ces irrégularités permettant d'obtenir un faisceau lumineux correspondant à une des fonctions AFS lorsque l'irrégularité considérée est amenée face à la source du dispositif projecteur considéré.

De telles solutions permettent d'obtenir, avec chaque dispositif projecteur dans lesquels elles sont implantées, l'ensemble des faisceaux AFS, en plus des fonctions codes classiques. Pour ce faire, il faut que chaque cylindre, respectivement chaque disque, comporte au moins cinq découpes, respectivement cinq irrégularités, distinctes sur sa surface latérale, respectivement sur sa périphérie. Outre le fait que ces cylindres et ces disques sont difficiles à réaliser, le plus gros problème que pose l'utilisation de tels systèmes est qu'ils nécessitent l'intervention d'une mécanique de grande précision, les cylindres et les disques en rotation devant pouvoir être arrêtés dans leur rotation et maintenus dans une position très précise. Les mécanismes permettant le blocage dans une position précise et le maintien dans une telle position sont difficiles à mettre en oeuvre, d'autant plus que de tels mécanismes doivent avoir une durée de vie très importante. Par ailleurs, le fait que ces mécanismes sont mis en oeuvre simultanément dans un dispositif projecteur gauche et dans un dispositif projecteur droit augmente le coût de réalisation de ces systèmes.

C'est un objet de l'invention de répondre à l'ensemble des problèmes qui viennent d'être mentionnés. A cet effet, dans l'invention, on propose une approche différente des approches jusqu'alors empruntées dans l'état de la technique. En effet, dans l'invention, on ne cherche plus à obtenir au moyen de chaque dispositif projecteur d'un type donné, par exemple un code, un ensemble de faisceaux lumineux différents, chacun des faisceaux correspondant à une fonctionnalité prédéterminée : dans l'invention, on cherche à obtenir un ensemble de faisceaux lumineux différents, chacun des faisceaux correspondant toujours à une fonctionnalité prédéterminée, dont la fonctionnalité est atteinte par la superposition de faisceaux lumineux différents produits par chaque dispositif projecteur de l'ensemble projecteur selon l'invention.

L'ensemble projecteur est constitué d'une paire de dispositifs projecteurs de même type (c'est à dire de type code, route, bimode, multimode, ...) disposés sur la face avant du véhicule, avec typiquement un premier dispositif projecteur disposé sur la face avant gauche, et un deuxième dispositif projecteur disposé sur la face avant droit du véhicule.

L'ensemble projecteur utilise avantageusement le fait que de nouvelles réglementations, notamment pour les fonctions AFS, définissent désormais les faisceaux lumineux de façon globale, c'est à dire provenant de la face avant du véhicule, et non plus de façon particulière pour chaque dispositif projecteur. Au moyen de dispositifs projecteurs de même type, on produit des faisceaux lumineux dissymétriques dont la superposition résulte en un faisceau lumineux global correspondant à une fonctionnalité particulière. Le nombre de fonctionnalités remplies par le faisceau lumineux global est plus important que le nombre de fonctionnalités réalisables au moyen de chacun des dispositifs projecteurs, pris isolément, constituant l'ensemble projecteur. La complexité des mécanismes intervenant pour produire, au sein de chaque dispositif projecteur, des faisceaux lumineux différents est ainsi grandement simplifiée, le nombre de faisceaux lumineux différents disponibles avec chaque dispositif projecteur étant peu important.

L'invention concerne donc essentiellement un ensemble projecteur constitué d'un premier dispositif projecteur et d'un deuxième dispositif projecteur, le premier dispositif projecteur et le deuxième dispositif projecteur étant disposés sur une face avant d'un véhicule automobile, le premier dispositif projecteur et le deuxième dispositif projecteur étant de même type et produisant respectivement un premier faisceau lumineux et un deuxième faisceau lumineux, le premier faisceau lumineux et le deuxième faisceau lumineux étant identiques dans une première configuration de l'ensemble projecteur, caractérisé en ce que le premier dispositif projecteur comporte un premier mécanisme pour modifier le premier faisceau lumineux et obtenir ainsi au moins une deuxième configuration de l'ensemble projecteur, chaque deuxième configuration produisant un faisceau lumineux global résultant d'une superposition du premier faisceau lumineux modifié et du deuxième faisceau lumineux, le deuxième faisceau lumineux étant alors différent du premier faisceau lumineux modifié, en ce que le premier dispositif projecteur et le deuxième dispositif projecteur sont des dispositifs projecteurs de type feu de croisement, en ce que le premier dispositif projecteur et le deuxième dispositif projecteur sont des dispositifs projecteurs de type bimode, et en ce que le deuxième dispositif projecteur comporte un deuxième mécanisme pour modifier le deuxième faisceau lumineux produit et obtenir ainsi au moins un deuxième faisceau modifié différent du premier faisceau lumineux et du premier faisceau lumineux modifié.

Deux dispositifs projecteurs sont considérés comme produisant des faisceaux lumineux identiques lorsque, pour une même position donnée de chacun des deux dispositifs projecteurs, les projections de ces faisceaux sur une surface disposée face à ces dispositifs projecteurs sont confondues.

L'élément projecteur selon l'invention peut également présenter, outre les caractéristiques principales énoncées dans le paragraphe précédent, une ou plusieurs des caractéristiques secondaires suivantes :
- chaque mécanisme de modification d'un faisceau lumineux a la capacité de provoquer un autre positionnement dudit faisceau lumineux, par exemple par une rotation selon un axe (sensiblement) vertical et/ou (sensiblement) horizontal du dispositif projecteur produisant ledit faisceau lumineux ; le ou les axes peuvent aussi présenter un angle donné par rapport à la verticale ou par rapport à l'horizontale,
- chaque mécanisme de modification d'un faisceau lumineux a la capacité de déplacer une source lumineuse par rapport à un élément réflecteur du dispositif projecteur comportant ledit mécanisme ;
- chaque mécanisme de modification d'un faisceau lumineux a la capacité de provoquer l'occultation d'au moins une partie dudit faisceau lumineux ;
- l'occultation d'au moins une partie d'un faisceau lumineux est réalisée au moyen d'un ensemble de un ou plusieurs caches, ledit ensemble de cache étant limité, dans un exemple particulier, à un premier cache et à un deuxième cache ; ces caches étant de préférence montés mobile par rapport à un axe, leur mouvement pouvant se faire en translation ou en rotation ( notamment par rapport à un axe donné, notamment oblique, à un axe parallèle ou perpendiculaire à l'axe optique ..)
- le premier cache est un cache utilisé dans les dispositifs projecteurs bimodes ou mutlimodes pour passer d'un faisceau lumineux de type feu de croisement à un faisceau lumineux de type feu de route ;
- l'ensemble de caches du premier mécanisme de modification du premier faisceau lumineux comporte un deuxième cache pour occulter une partie supérieure et une partie inférieure du premier faisceau lumineux, un premier cache étant un cache utilisé dans les dispositifs projecteurs bimodes ou multimodes pour passer d'un faisceau lumineux de type feu de croisement à un faisceau lumineux de type feu de route ;
- l'ensemble de caches du deuxième mécanisme de modification du deuxième faisceau lumineux comporte un deuxième cache pour occulter une moitié supérieure du deuxième faisceau lumineux, un premier cache étant un cache utilisé dans les dispositifs projecteurs bimodes ou multimodes pour passer d'un faisceau lumineux de type feu de croisement à un faisceau lumineux de type feu de route ;
- le faisceau lumineux global est un faisceau lumineux correspondant à une fonction AFS.

Un autre objet de l'invention est un véhicule automobile équipé d'un ensemble projecteur comportant les caractéristiques principales précédemment précisées et éventuellement une ou plusieurs caractéristiques secondaires qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, l'exemple illustré montre l'utilisation d'un ensemble projecteur selon l'invention composé d'une paire de dispositifs projecteurs de type bimodes code/route, mais d'autre types de projecteurs, par exemple des feux de route ou des codes non bimodes, peuvent être utilisés d'un manière identique à celle illustrée.
- à la figure 1, un ensemble de projections de faisceaux lumineux qu'il est possible d'obtenir avec les dispositifs projecteurs intervenant dans un exemple de réalisation de l'ensemble projecteur selon l'invention ;
- à la figure 2, une projection d'un premier faisceau lumineux global produit par l'ensemble projecteur selon l'invention ;
- à la figure 3, une projection d'un premier exemple d'un deuxième faisceau lumineux global produit par l'ensemble projecteur selon l'invention ;
- à la figure 4, une projection d'un deuxième exemple d'un deuxième faisceau lumineux global produit par l'ensemble projecteur selon l'invention ;
- à la figure 5, une projection d'un troisième exemple d'un deuxième faisceau lumineux global produit par l'ensemble projecteur selon l'invention ;
- à la figure 6, une projection d'un quatrième exemple d'un deuxième faisceau lumineux global produit par l'ensemble projecteur selon l'invention ;
- à la figure 7, une projection d'un cinquième exemple d'un deuxième faisceau lumineux global produit par l'ensemble projecteur selon l'invention ;
- à la figure 8, une projection d'un sixième exemple d'un deuxième faisceau lumineux global produit par l'ensemble projecteur selon l'invention ;
- à la figure 9, une projection d'un septième exemple d'un deuxième faisceau lumineux global produit par l'ensemble projecteur selon l'invention.

Les éléments apparaissant sur différentes figures conservent les mêmes références.

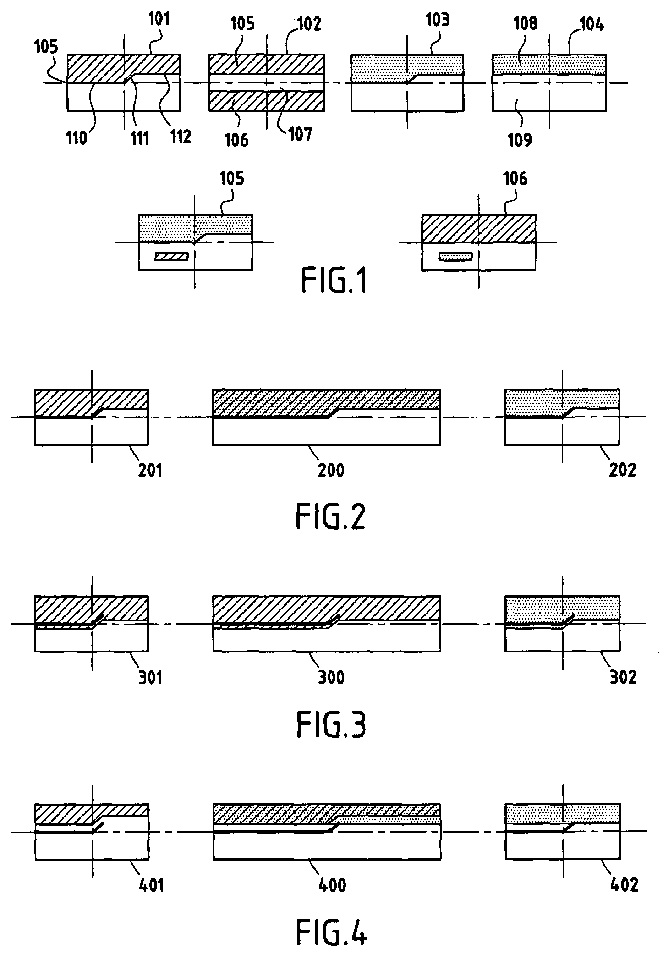

A la figure 1, on a représenté, à titre d'exemple et de façon schématique, six projections sur une surface plane des faisceaux lumineux pouvant être produits par l'un ou l'autre dispositif projecteur constituant un élément projecteur selon l'invention. La surface plane de projection est disposée face au dispositif projecteur considéré, perpendiculairement à son axe optique. La partie noircie de ces projections correspond à une absence de lumière dans cette partie, la partie laissée blanche correspondant à un éclairement normal au moyen du dispositif projecteur considéré.

Une première projection 101 est une projection obtenue avec le premier dispositif projecteur, qui est le dispositif projecteur gauche, de l'ensemble projecteur. Il correspond à la projection d'un faisceau lumineux habituellement utilisé pour les feux de type code, le faisceau lumineux existant uniquement sous une ligne de coupure 105. La ligne de coupure est essentiellement constituée d'une partie horizontale basse 110, suivie d'un décrochement 111, au niveau de la projection de l'axe optique du dispositif projecteur considéré, puis d'une partie horizontale haute 112. Une telle configuration permet de ne pas éblouir les conducteurs croisés, à gauche dans l'exemple considéré, tout en assurant un éclairage optimal sur la droite.

Une deuxième projection 102, obtenue avec le premier dispositif projecteur, correspond à un faisceau lumineux dont on a occulté une partie supérieure 105 et une partie inférieure 106, seule une partie centrale 107 laissant effectivement passer de la lumière.

Une troisième projection 103 est identique à la première projection 101, mais elle est obtenue au moyen du deuxième dispositif projecteur qui est le dispositif projecteur droit, de l'ensemble projecteur.

Une quatrième projection 104, obtenue avec le deuxième dispositif projecteur, correspond à un faisceau lumineux dont on a occulté une moitié supérieure 108, seule une partie basse 109 laissant effectivement passer de la lumière. La partie basse laissant passer de la lumière correspond à une zone située sous la partie horizontale basse 110, et sous le prolongement de celle-ci, de la ligne de coupure 105.

Une cinquième projection 105, obtenue avec le premier ou le deuxième dispositif projecteur, correspond à un faisceau lumineux habituellement utilisé pour les feux de type code, comme pour la première projection, mais dans laquelle on a de plus occulté une partie du faisceau située en dessous de la partie horizontale basse 110.

Une sixième projection 106, obtenue avec le premier ou le deuxième dispositif projecteur, correspond à un faisceau dont on a occulté une moitié supérieure, seule une partie basse laissant effectivement passer de la lumière, comme dans la quatrième projection, mais dans laquelle on a de plus occulté une partie du faisceau située en dessous d'une partie latérale de la ligne de coupure.

Dans l'exemple considéré, on considère donc que le premier dispositif projecteur peut produire un premier faisceau 101 et un premier faisceau modifié 102, et que le deuxième dispositif projecteur peut produire un deuxième faisceau 103 et un deuxième faisceau modifié 104. Les différents faisceaux réalisables pour chaque dispositif projecteur peuvent être obtenus soit par l'utilisation de caches, soit par un déplacement relatif d'une source lumineuse par rapport à un élément réflecteur dans lequel ladite source est disposée. Les deux dispositifs projecteurs étant, dans l'exemple considéré, bimodes ou multimodes ils peuvent également produire un faisceau lumineux dont aucune partie n'est occultée

Dans le cas de l'utilisation de caches, on propose par exemple, dans l'élément projecteur selon l'invention, d'utiliser un ensemble de caches par projecteur, chaque ensemble comportant deux caches. Dans un exemple particulier de réalisation, le premier cache peut pivoter d'une position occultante à une position non occultante en basculant vers l'avant du dispositif projecteur dans lequel il est disposé, et le deuxième cache peut pivoter d'une position occultante à une position non occultante en basculant vers l'arrière. On évolue ainsi uniquement entre différentes positions de butée, qui sont mécaniquement très simples à réaliser, et qui garantissent une grande précision dans le placement des caches.

Les figures 2 à 6 sont organisées de la même façon : elles comportent une partie gauche montrant le premier faisceau produit par le premier projecteur, une partie droite montrant le deuxième faisceau produit par le deuxième projecteur, et une partie centrale, montrant le faisceau lumineux global de l'élément projecteur selon l'invention, le faisceau lumineux global correspondant à la superposition du premier faisceau et du deuxième faisceau. Les zones non lumineuses du premier faisceau sont hachurées obliquement, celles du deuxième faisceau sont hachurées verticalement. Dans le faisceau lumineux global, on considère donc qu'une zone hachurée verticalement et obliquement n'est pas du tout éclairée, qu'une zone hachurée verticalement ou obliquement est éclairée approximativement à cinquante pour cent, et que les zones non hachurées sont éclairées à cent pour cent des capacités de l'élément projecteur. La ligne de coupure 105 apparaît à titre de repère sur les différentes projections des faisceaux lumineux.

A la figure 2, on a représenté une première configuration 200 du faisceau lumineux global. La première configuration 200 correspond à la superposition d'un premier faisceau lumineux 201, correspondant à la première projection 101, et d'un deuxième faisceau lumineux 202, correspondant à la troisième projection 103. On obtient donc une première configuration de l'élément projecteur dans laquelle le faisceau lumineux global 200 est le faisceau lumineux habituellement produit par les dispositifs projecteurs de type code, ou bifonction en position code.

Aux figures 3 à 6, on a représenté une deuxième configuration du faisceau lumineux global. Le terme deuxième configuration est un terme générique pour désigner une configuration différente de la première configuration illustrée à la figure 2. On a donc représenté sur ces figures plusieurs deuxièmes configurations différentes, qui sont obtenues grâce à la mise en oeuvre de l'élément projecteur selon l'invention.

La figure 3 montre une deuxième configuration 300 du faisceau lumineux global, qui correspond à la superposition d'un premier faisceau lumineux 301 modifié, correspondant à la première projection 101 décalée vers le bas, et d'un deuxième faisceau lumineux 302 modifié, correspondant à la troisième projection 103 également décalée vers le bas.

On obtient ainsi une deuxième configuration de l'élément projecteur dans laquelle le faisceau lumineux global 300 remplit la fonctionnalité dite Town Light. Pour chaque dispositif projecteur, le décalage vers le bas des faisceaux lumineux 301 et 302 peut être obtenu par l'utilisation d'un mécanisme de correction dynamique, cette correction dynamique permettant une rotation du dispositif projecteur autour d'un axe de rotation horizontal et perpendiculaire à l'axe optique. Le mécanisme de correction dynamique est généralement utilisé pour réaliser une correction d'assiette du véhicule. A titre complémentaire, on peut également utiliser un mécanisme de rotation latéral, habituellement utilisé pour la fonction Dynamic Bending Light, pour étaler le faisceau lumineux global sur les côtés du véhicule, améliorant encore ainsi la fonction Town Light. A cet effet, l'élément projecteur prévoit un dispositif de contrôle du mécanisme de rotation latéral pour faire tourner chaque dispositif projecteur dans des directions opposées, le dispositif projecteur gauche étant légèrement orienté vers la gauche, et le dispositif projecteur droit étant légèrement orienté vers la droite.

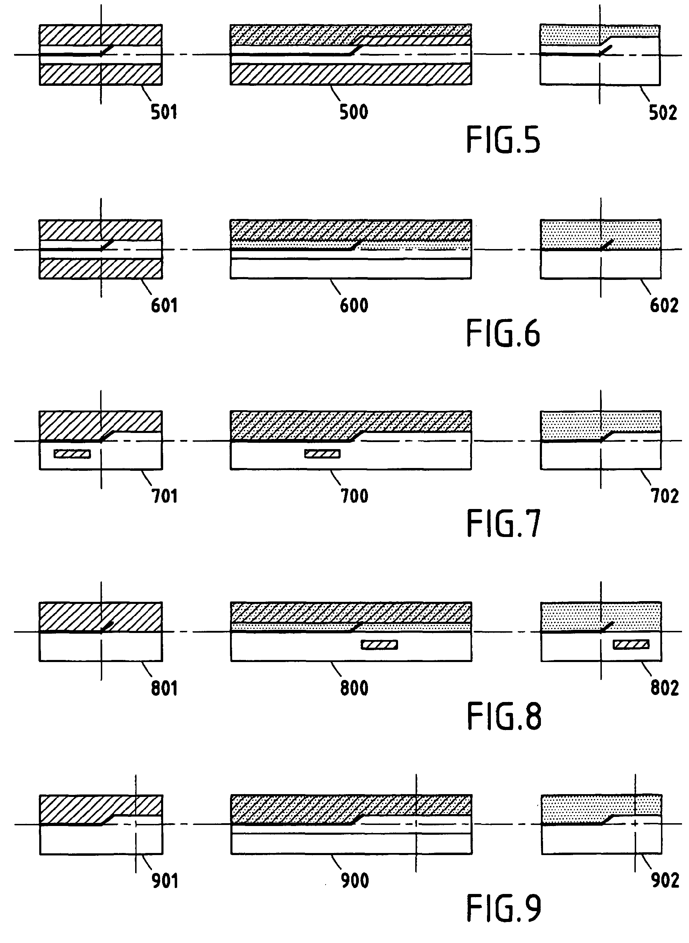

La figure 4 montre une deuxième configuration 400 du faisceau lumineux global, qui correspond à la superposition d'un premier faisceau lumineux 401 modifié, correspondant à la première projection 101 décalée vers le haut, et d'un deuxième faisceau lumineux 402 modifié, correspondant à la quatrième projection 104 également décalée vers le haut.

On obtient ainsi une deuxième configuration de l'élément projecteur dans laquelle le faisceau lumineux global 400 remplit la fonctionnalité dite Motorway Light, avec une portée légèrement augmentée sans risque d'éblouissement d'un conducteur croisé. Le décalage vers le haut des faisceaux lumineux 401 et 402 peut être obtenu par l'utilisation du mécanisme de correction dynamique.

La figure 5 montre une deuxième configuration 500 du faisceau lumineux global, qui correspond à la superposition d'un premier faisceau lumineux 501 modifié, correspondant à la deuxième projection 102, et d'un deuxième faisceau lumineux 502 modifié, correspondant à la troisième projection 103 décalée vers le haut.

On obtient ainsi une deuxième configuration de l'élément projecteur dans laquelle le faisceau lumineux global 500 remplit la fonctionnalité dite AWL, avec notamment une intensité lumineuse moins importante vers le bas. A titre complémentaire, on peut là encore utiliser le mécanisme de rotation latéral, habituellement utilisé pour la fonction Dynamic Bending Light, pour étaler le faisceau lumineux global sur les côtés du véhicule. On peut aussi utiliser le système de correction d'assiette dynamique.

La figure 6 montre une deuxième configuration 600 du faisceau lumineux global, qui correspond à la superposition d'un premier faisceau lumineux 601 modifié, correspondant à la deuxième projection 102, et d'un deuxième faisceau lumineux 602 modifié, correspondant à la quatrième projection 104.

On obtient ainsi une deuxième configuration de l'élément projecteur dans laquelle le faisceau lumineux global 600 remplit une fonctionnalité dite de tourisme, avec notamment une intensité lumineuse moins importante dans une partie inférieure, et une intensité nulle vers le haut. La fonctionnalité dite de tourisme permet d'obtenir un faisceau lumineux global, à partir de dispositifs projecteurs initialement conçus pour être utilisés dans des pays utilisant un sens de circulation donné, adapté à une utilisation dans des pays utilisant un autre sens de circulation en n'éblouissant pas un conducteur croisé. La deuxième configuration 600 peut également être utilisée comme faisceau lumineux de substitution lorsque la fonctionnalité DBL connaît des dysfonctionnements et que les dispositifs projecteurs sont bloqués avec une orientation qui risquerait d'éblouir des conducteurs croisés.

A la figure 7, on a représenté une configuration 700 du faisceau lumineux global, qui correspond à la superposition d'un premier faisceau lumineux 701, correspondant à la cinquième projection 105, et d'un deuxième faisceau lumineux 702, correspondant à la troisième projection 103. On obtient donc une configuration de l'élément projecteur dans laquelle le faisceau lumineux global 700 est le faisceau lumineux habituellement produit par les dispositifs projecteurs de type code, ou bifonction en position code, dans lequel la partie du faisceau située du côté de la circulation en sens inverse (pour un sens de conduite à droite dans l'exemple représenté) est moins intense, de manière à ne pas éblouir les conducteurs circulant en sens inverse par réflexion sur la route mouillée, de manière à assurer la fonction dite AWL plus haut.

A la figure 8, on a représenté une configuration 800 du faisceau lumineux global, qui correspond à la superposition d'un premier faisceau lumineux 801, correspondant à la quatrième projection 104, et d'un deuxième faisceau lumineux 802, correspondant à la sixième projection 106. On obtient donc une configuration de l'élément projecteur dans laquelle le faisceau lumineux global 800 qui remplit la fonctionnalité dite de tourisme, comme sur la figure 6, et qui remplit également la fonctionnalité dite AWL.

A la figure 9, on a représenté une configuration 900 du faisceau lumineux global, qui correspond à la superposition d'un premier faisceau lumineux 801, correspondant à la première projection 101, et d'un deuxième faisceau lumineux 802, correspondant à la troisième projection 103. On obtient donc une configuration de l'élément projecteur dans laquelle le décrochement entre les parties horizontales basse et haute de la coupure est décalé par rapport à l'axe du faisceau lumineux, à gauche dans l'exemple représenté, de manière à assurer une fonctionnalité dite plus haut BL, permettant d'éclairer de façon optimale la route lorsque le véhicule aborde un virage, à gauche dans l'exemple représenté.

Dans d'autres exemples d'éléments projecteurs selon l'invention, des projections de faisceaux lumineux différentes de celles représentées à la figure 1 peuvent être obtenues, soit en remplacement, soit en complément, de celles représentées sur la figure 1. Toutes les combinaisons possibles des différents faisceaux produits par chacun des deux dispositifs projecteurs de même type constituant l'élément projecteur selon l'invention sont réalisables.

## Revendications

1. Ensemble projecteur comprenant un premier dispositif projecteur et un deuxième dispositif projecteur, le premier dispositif projecteur et le deuxième dispositif projecteur étant disposés sur une face avant d'un véhicule automobile, le premier dispositif projecteur et le deuxième dispositif projecteur étant de même type et produisant respectivement un premier faisceau lumineux (201) et un deuxième faisceau lumineux (202), le premier faisceau lumineux (201) et le deuxième faisceau lumineux (202) étant identiques dans une première configuration de l'ensemble projecteur, **caractérisé en ce que** le premier dispositif projecteur comporte un premier mécanisme pour modifier le premier faisceau lumineux (201) et obtenir ainsi au moins une deuxième configuration de l'ensemble projecteur, chaque deuxième configuration produisant un faisceau lumineux global (300 ; 400 ; 500 ; 600) résultant d'une superposition du premier faisceau lumineux modifié (301 ; 401 ; 501 ; 601) et du deuxième faisceau lumineux (202), le deuxième faisceau lumineux (202) étant alors différent du premier faisceau lumineux modifié (301 ; 401 ; 501 ; 601), **en ce que** le premier dispositif projecteur et le deuxième dispositif projecteur sont des dispositifs projecteurs de type feu de croisement, **en ce que** le premier dispositif projecteur et le deuxième dispositif projecteur sont des dispositifs projecteurs de type bimode, et **en ce que** le deuxième dispositif projecteur comporte un deuxième mécanisme pour modifier le deuxième faisceau lumineux (202) produit et obtenir ainsi au moins un deuxième faisceau modifié (302 ;402 ;502 ;602) différent du premier faisceau lumineux (201) et du premier faisceau lumineux modifié (301 ;401; 501; 601).

2. Ensemble projecteur selon la revendication précédente **caractérisé en ce que** chaque mécanisme de modification d'un faisceau lumineux a la capacité de provoquer un autre positionnement dudit faisceau lumineux.

3. Ensemble projecteur selon la revendication précédente **caractérisé en ce que** l'autre positionnement du faisceau lumineux est provoqué par une rotation selon un axe vertical ou sensiblement vertical du dispositif projecteur produisant ledit faisceau lumineux.

4. Ensemble projecteur selon la revendication 2 **caractérisé en ce que** l'autre positionnement est provoqué par une rotation selon un axe horizontal ou sensiblement horizontal du dispositif projecteur produisant ledit faisceau lumineux.

5. Ensemble projecteur selon l'une au moins des revendications précédentes **caractérisé en ce que** chaque mécanisme de modification d'un faisceau lumineux a la capacité de déplacer une source lumineuse par rapport à un élément réflecteur du dispositif projecteur comportant ledit mécanisme.

6. Ensemble projecteur selon l'une au moins des revendications précédentes **caractérisé en ce que** chaque mécanisme de modification d'un faisceau lumineux a la capacité de provoquer l'occultation d'au moins une partie dudit faisceau lumineux.

7. Ensemble projecteur selon la revendication précédente **caractérisé en ce que** l'occultation d'au moins une partie d'un faisceau lumineux est réalisée au moyen d'un ensemble de un ou plusieurs caches.

8. Ensemble projecteur selon la revendication précédente **caractérisé en ce que** l'ensemble de caches est limité à un premier cache et à un deuxième cache.

9. Ensemble projecteur selon la revendication précédente et la revendication 1 **caractérisé en ce que** le premier cache est un cache utilisé dans les dispositifs projecteurs bimodes pour passer d'un faisceau lumineux de type feu de croisement à un faisceau lumineux de type feu de route.

10. Ensemble projecteur selon la revendication 7 **caractérisé en ce que** l'ensemble de caches du premier mécanisme de modification du premier faisceau lumineux (201) comporte un deuxième cache pour occulter une partie supérieure (105) et une partie inférieure (106) du premier faisceau lumineux (201), un premier cache étant un cache utilisé dans les dispositifs projecteurs bimodes pour passer d'un faisceau lumineux de type feu de croisement à un faisceau lumineux de type feu de route.

11. Ensemble projecteur selon l'une au moins des revendications 7 et 1 **caractérisé en ce que** l'ensemble de caches du deuxième mécanisme de modification du deuxième faisceau lumineux comporte un deuxième cache pour occulter une moitié supérieure (108) du deuxième faisceau lumineux (202), un premier cache étant un cache utilisé dans les dispositifs projecteurs bimodes pour passer d'un faisceau lumineux de type feu de croisement à un faisceau lumineux de type feu de route.

12. Ensemble projecteur selon l'une au moins des revendications précédentes **caractérisé en ce que** le faisceau lumineux global (300 ;400 ;500) est un faisceau lumineux correspondant à une fonction AFS.

13. Véhicule automobile équipé d'un ensemble projecteur selon l'une au moins des revendications précédentes.
